# EUROPEAN PATENT APPLICATION

(11) **EP 0 950 570 A2**
(43) Date of publication of application: **20.10.1999**
(21) Application number: 99105608.6
(22) Date of filing: 19.03.1999
(51) Int. Cl.: B60R 11/02

(54) **Automotive information system, automotive computer system, and method of controlling the automotive information system**

(30) Priority: 24.03.1998 JP 7611598; 14.04.1998 JP 10229198
(71) Applicant: CLARION Co., Ltd., Tokyo (JP)
(72) Inventor: Ido, Kazuhiro c/o Clarion Co., Ltd., Tokyo (JP); Chubachi, Yoshiki c/o Clarion Co., Ltd., Tokyo (JP); Uehara, Nagatoshi c/o Clarion Co., Ltd., Tokyo (JP); Hamashima, Sadafumi c/o Clarion Co., Ltd., Tokyo (JP)
(74) Representative: Fritsche, Rainer, Dipl.-Wirtsch.-Ing.

(57) **Abstract**

An automotive information system including a car audio system and other information units or devices is controlled by a small-sized computer that is also part of the automotive information system and that is loaded with a general-purpose OS. The automotive information system has a local BUS of a form conforming with the data form of the CPU, a PCI BUS that interconnects the units or devices of the system, and a PCI BUS boot controller that performs form conversion of data exchanged between these two types of BUSes. Audio data which may be analog or digital and other data which are inherently digital are transmitted in the form of digital signals through the PCI BUS, and these data are processed digitally by the CPU. With this arrangement, the small-sized computer and information devices such as a car audio system are combined in such a manner as not to impair the advantages of the computer and the information devices. Audio data when it is formed of analog signals is audio-to-digital-converted into audio signals in the form of digital signals. Thus, audio data and other digital data are transmitted through a common digital circuit, so that the wiring layout is simplified and audio characteristic is stabilized against noise and change in the environmental conditions.

## Description

### Background of the Invention

### 1. Field of the Invention

The present invention relates to an automotive Information system which operates under the control of a small-sized computer. In this specification, the term "automotive information system" is used to mean a system that is used on a vehicle such as an automobile and that consolidates one or more of a plurality of information apparatuses such as a car audio system, a car navigation system, a voice recognition system for recognizing driver's order, a hand-free mobile telephone, a security system, and so forth. The present invention also is concerned with an automotive computer system. The invention further pertains to a method Of controlling an automotive information system.

### 2. Description of the Related Art

In recent years, remarkable progress has been achieved in the field of semiconductors, enabling miniaturization and sophistication of various electronic devices incorporating semiconductors. Personal computers (referred to also as "PCs", hereinafter) are typical examples of electronic devices that are experiencing reduction in sizes and improvement in performance by virtue of the progress in the field of semiconductor.

In particular, small-sized computers such as handheld-type computers and so-called palm-top computers are finding spreading use. Such small-sized computers will be inclusively referred to as a "handheld computer", hereinafter. Such handheld computers employs a basic software, i.e., an operating system (referred to also as "OS", hereinafter), typically a general-purpose OS known as Windows CE (registered trademark of Microsoft Corporation).

Such a general-purpose OS exquisitely manages CPU and memories in the computer, thereby implementing high-degree of processing ability, while providing standard user-interfaces that are easy to use and that have no dependency on the programs. The OS also permits free modification or addition of program, provided that such programs comply with predetermined forms supported by the OS, thus enabling addition or modification of functions to be performed by the computer.

Another example of electronic devices that are on their way towards reduction in size and improvement in the performance arc automotive information apparatuses such as car audio systems, car navigation systems, and so forth. The car audio system is a system which is referred to also as a "car stereo" and which consolidates various components such as a CD player, AM/FM tuners, amplifiers and speakers, The car navigation system is a system which locates the instant position of an automobile based on the outputs of devices such as an azimuth magnet, a trip meter and a GPS, and guides the driver to a designated destination by showing the momentary positions on a map displayed on a screen.

There is a current trend that a car audio system is combined with other automotive devices or systems such as a car navigation system, hand-free mobile phones and security system. A system that consolidates these automotive devices and systems will therefore be referred to as an automotive information system, as stated before.

Conventionally, handheld personal computers having an OS of the type mentioned before and automotive information systems or the kind stated above have been designed and manufactured separately from and independently of each other. Although there have been car audio systems that incorporate a computer in general sense, such a computer is a kind of processor or a built-in system designed only for specific purposes and is fundamentally different from a handheld computer loaded with a general-purpose OS.

More specifically, such a built-in system employs a CPU having minimum required functions. Namely, the built-in system implements, by means of simple programs relying on an assembler, minimum required tasks to be performed on hardware, e.g., recognition of a switch operation, activation and deactivation off a disk playback mechanism, and so forth. Such a built-in system, unlike a handheld personal computers, cannot cope with demands for versatility or functions such as processing and storage of data, modification or addition of a program, and so on.

Meanwhile, a handheld personal computer by itself cannot perform functions such as playing a music or controlling a car audio system. Therefore, a user of a handheld computer, even when be happened to bring his computer into an automobile, cannot use the computer in relation to the car audio system that is installed on the automobile.

It is a current trend that a car audio system, having conventional components such as radio tuners, cassette tape deck, CD player and so on, are combined with other devices such as an MD player, a CD/MD auto-changer, a car navigation system, a voice recognition system for recognizing driver's order, hand-free mobile phones, a security system, and so forth, thus providing a complicated automotive information system. It is not easy for the driver to manage such a complicated automotive information system by manipulating various switches provided on individual component devices or systems of the automotive information system.

Namely, such a complicated automotive information system composed of many component devices or systems inevitably has many keys, buttons, dials and switches which are located at various positions on the dashboard or console. This heavily burdens the driver because the driver has to understand and remember the locations of various keys, dials and switches.

In order that the car driver can easily and efficiently use a complicated automotive information system which becomes complicated more and more, it is desirable that the system is controlled by a compact computer that has a high grade of processing performance suitable for controlling the complicated system and that provides user-friendly user interface while affording addition or modification of controlling function, specifically an information processing apparatus equivalent to a handheld personal computer loaded with a general-purpose OS.

In view of the current automotive society and heavy traffic congestion, it is desirable also from the view point of computer-related industries that handheld computers find spreading use by being combined with automotive information equipment. In particular, a handheld computer when combined with an automotive information system enhances utilities of both the handheld computer and the automotive information system. For instance, operation keys and memories can be used commonly both for the handheld computer and the automotive information system. When the driver needs a certain type of information, the handheld computer provides the information by way of synthesized voice message which is output from a speaker of the car audio system, so that the driver can obtain the information by listening to the voice message. When the automotive information system includes a mobile phone, the handheld computer on the automobile can make access to an external computer network via the telephone communication line. Thus, the utility of the automotive information system, as well as that of the handheld computer, can be enhanced advantageously.

In general, a CPU adapted to use a general-purpose OS operates at a high speed. Therefore, when such a CPU is used in combination with devices or systems included in the automotive information system which may fail to operate at high speed, it is desirable that different BUSes are used for the CPU and the automotive information system, in order to accommodate the difference in the operation speed. It is also desirable that component devices and systems constituting the automotive information system are connected by a simple and neat wiring layout.

A car audio system included in the automotive information system which is controlled by a computer or which incorporates a computer-controlled electronic device essentially handles information in the form of digital data in addition to audio information such as a music. For instance, when the car audio system is operating in a paying mode or a rewinding mode, a message reading PLAY or REW is displayed on a display section such as a liquid crystal display unit. To this end, characters to be displayed are formed by digital data such as character codes or dot patterns.

In an automotive information system incorporating a car navigation system, data such as programs and maps are read from a CD-ROM and are developed into a bit map corresponding to maps and characters so that the maps and characters are displayed on the liquid crystal display screen.

In this specification, data which is inherently digital will be referred to as "digital data", while sound data such as of music will be referred to as "audio" data, regardless of whether it is in the form of analog or digital form.

In the known automotive information system having a car audio system, constructions of various parts are rendered complicated, due to the fact that audio data is handled by a circuit which is different from that used for handling digital data such as character and image data.

For instance, in an automotive information system having a CD-ROM auto changer which is capable of reading data both from a music CD and a CD-ROM and which is connected to a car audio system, the audio data road from the music CD is lent to an amplifier via an analog signal line, while digital data read from the CD-ROM is sent to the car navigation system via a digital communication line such as a BUS. It is therefore necessary that connectors are used for respective Component devices or systems of the automotive information system, with the result that the construction of the whole system is complicated

In addition, intricate connecting wiring systems having many connection cords have to be used for achieving mutual connections between the component devices or systems of the automotive information system. Consequently, laborious work is necessary for accomplishing the connection, as well at for protective maintenance and repair. This problem is becoming serious because the number of components consolidated in automotive information systems is increasing. There is a trend that the users separately purchase desired component devices or systems that are sold as option parts and requests the car dealer to assemble them together to form a consolidated system or to add a new component device or system to an listing system which has already been set up on the automobile.

It is quite difficult to determine the wiring scheme, i.e., the components to be mutually connected, connectors of each component to be used for achieving the connection, type of the cable to be used, and so forth. The number and the types of the connectors vary according to the component devices. It is also necessary to suitably select the type of the connectors and cables, e.g., conventional audio cables for analog signals, digital communication cables for digital data, optical fibers, and so forth.

After the automotive information system has safely been set up, if the user wishes to add a new component device or system, it is necessary to modify the wiring layout in which various kinds of cables are laid in an intricate manner, in order to connect the additional component device or system.

For the purpose of modifying the wiring layout, it say become necessary to disconnect the existing cables. The connections have to be restored after connecting the new component device. To this end, it is necessary to make a memo or record concerning the positions and types of the cables before they are disconnected. Making such a memo or record alone is quite a troublesome work. This problems is encountered also when the cables are disconnected for the purpose of protective maintenance or repair.

Further, different types of cables have different natures and require different kinds of attention in handling. Thin also is a factor that makes it difficult to determine and execute the wiring layout. For instance, a cable designed to electrically transmit digital signals can sustain bending to some extent but is liable to be affected by electrical noises. In contrast, optical fibers are not resistant to bonding, although they are less likely to be influenced by electrical noises. Cables for analog signals undesirably pick up strong electrical noises. Thus, different types of cables have to be handled and treated differently The routing of the cables, i.e., the paths along which the cables are to be laid must be determined with deliberative consideration.

Known car audio systems have a drawback in that, when audio signals are transmitted through an analog circuit, the audio characteristic is undesirably deteriorated due to a change in environmental condition such as temperature and humidity or due to influence of noises. For instance, the signal frequency which can be best transmitted through an analog signal cable varies depending on the temperature.

The user of a car audio system can set up the best condition, e.g., tone, balance and so forth, of playback of music, by using, for example, a graphic equalizer. However, the actual playback condition tends to deviate from the set best condition due to a change in the audio characteristic caused by a variation of the environmental condition or by noise. The user therefore has to set up again the payback condition so as to cancel the deviation. Frequent change of setting is extremely troublesome. The change in the audio characteristic is serious particularly in audio systems used on automobiles, considering that automobiles are subjected to a variety of conditions of use, depending on the district, season, habits of the drivers, and so on.

Conventional automotive information system employs a wiring system in which cables or lines led from various component units are concentrated to a central unit which is also referred to as a "hub". This conventional style of wiring is quite inconvenient because all the wires and lines from various component units located at various positions on the automobile are concentrated to the hub.

This conventional wiring system retires cables and lines of greater lengths. This not only renders the wiring work troublesome but enhances the risk of change in the audio characteristic due to noise and change in the environmental condition. In addition, concentration of many cables and lines to the central hub further impedes addition of a component unit, protective maintenance and repair, because of difficulty encountered in disconnecting and connecting the cables and lines.

### SUMMARY OF THE INVENTION

Accordingly, it is a first object of the present invention to provide an automotive information system, as well as an automotive computer system and a method of controlling an automotive information system, in which a small-sized computer such as a handheld computer using a general purpose OS is combined with information devices or systems that are used on automobiles. More specifically, the combination is achieved in such a manner as to enable maximum use of the merits and functions of both the computer and the information devices and systems, thus offering advantages that could never be achieved by the known arts.

It is a second object of the present invention to provide an automotive information system, as well as an automotive computer system and a method of controlling an automotive information system, which employs a plurality of types of BUSes so us to permit both a high-speed computer and automotive information devices or systems to operate at their optimum operation speeds, thus eliminating idle time.

It is a third object of the present invention to provide an automotive information system, as well as an automotive computer system and a method of controlling an automotive information system, in which various automotive information devices and systems are connected in a manner like a sweet-potato-vine, thus achieving a rational wiring layout.

It is a fourth object of the present invention to provide an automotive information system which is arranged to permit both audio data and other inherently-digital data can be transmitted through a common digital circuit.

To this end, according to one aspect of the present invention, there is provided an automotive information system comprising a controlling computer; the computer having a CPU ad an operating system; the operating system including: means for administrating resources available on the computer; input/output controlling means including a user interface; and program executing means for executing a predetermined program.

In accordance with a second aspect of the present invention, there is provided an automotive computer system, comprising: an operating system that implements environment necessary for execution Of a program of a predetermined form; a CPU; an automotive information system having a plurality of information devices; and controlling means for controlling the automotive information system.

In accordance with a third aspect of the present invention, there is provided a method of controlling an automotive information system by using a computer having an operating system, comprising: causing the operating system to implement environment necessary for executing a program of a predetermined form; and causing the program to control the automotive information system.

In the automotive information system, automotive computer system and the method of controlling an automotive information system in accordance with first to third aspect of the present invention, the computer used for controlling the automotive information system has a general-purpose OS that administrates the resources such as a CPU and memories of the computer so as to permit full use of the ability of the computer. The general-purpose OS also provides a user-friendly standardized user interface which is easy to use and which has no dependency on the programs. Further, the general-purpose OS permits addition or modification of a program having a predetermined form, thus facilitating addition or modification of the functions to be performed by the computer. For these reasons, the general-purpose OS serves to facilitate the control of complicated automotive information system. At the same time, the computer having general-purpose OS and combined with automotive information devices enables the user to utilize various kinds of programs available on the computer and to handle various kinds of information by making use of the function of the automotive information device such as a car audio system.

In a specific form of the present invention, an automotive information system comprises: a controlling computer having a CPU; a plurality of information devices; a first BUS corresponding to the form of the CPU of the computer; and a second BUS interconnecting the information devices of the automotive information system.

In another form of the invention, an automotive information system comprises: a controlling computer having a CPU; a plurality of information device; a local BUS corresponding to the form of the CPU of the computer; and a PCI BUS interconnecting the information devices of the automotive information system.

In these forms of the present invention, the automotive information system may comprise data form converting means for converting the form of data exchanged between the BUSes,

The automotive information system of the present invention may further comprise a third BUS that connects the plurality of information devices in a daisy-chain fashion.

The present invention also provides an automotive computer system, comprising: a computer having a CPU; an automotive information system having a plurality of information devices; a first BUS corresponding to the form of the CPU of the computer; and a second BUS interconnecting the information devices of the automotive information system.

Provided also by the present invention is an automotive computer system, comprising: a computer having a CPU; an automotive information system having a plurality of information devices; a local BUS corresponding to the form of the CPU of the computer; and a PCI BUS interconnecting the information devices of the automotive information system.

The automotive computer system of any type stated above may further comprise data form converting means for converting the form of data to be exchanged between the BUSes.

The automotive computer system may also comprise a third BUS for connecting the plurality of information devices of the automotive information system in a daisy-chain fashion.

In accordance with a fourth aspect of the present invention, there is provided a method of controlling an automotive information system including a plurality of information devices by using a computer having a CPU, comprising: causing the CPU to transmit and receive data through a first BUS corresponding to the form of the CPU; and causing the information devices to exchange data through a second BUS interconnecting the information devices.

In the controlling method of the fourth aspect, as well as in the foregoing automotive information system and automotive computer system employing different BUSes,the CPU of the computer and the information devices use BUSes that are adapted to the CPU and the information devices, respectively. When data is exchanged between these different BUSes, conversion of the form of data is executed as necessary. Therefore, the CPU having high operation speed is not required to keep pace with operation cycles of the information devices that operate at much lower speeds than the CPU. Therefore, the CPU is allowed to quickly perform complicated processings by, for example, efficiently making access to memories. Further, the risk of conflict between the data handled by the CPU and the data handled by the information devices, which may occur when a single BUS is used commonly both by the CPU and the information devices, can be avoided, whereby the computer and the information devices can operate smoothly without being interfered by each other.

It is also possible to easily conduct multi-task operation such that, for example, the CPU executes a processing by using the BUS adapted to the CPU while audio signals are being reproduced by on informtion device such as a car audio system using the BUS interconnecting the information devices. Further, replacement of the CPU can easily be made simply by changing the BUS to another type of BUS which is adapted to the new CPU, without requiring modification or change in the arrangement of the information devices and the BUS which interconnects these devices.

The daisy-chain type connection of the information devices, achieved by connecting these devices in a manner like a sweet-potato-vine, enhances the degree of freedom in the selection of locations of the information devices. This permits easier setting of the devices than in the case of a star-type connection in which long cables are concentrated to a central hub. This also affords simple and neat wiring layout, allowing easy modification and protective maintenance, as well as repair.

In accordance with a fifth aspect of the present invention, there is provided an automotive information system, comprising: a plurality of devices for providing at least one of audio data and digital data; transmitting means for transmitting, in the form of digital signals, the audio data and digital data from the devices; processing means for processing the digital data and the audio data in the form of the digital signal; audio output means for outputting, in the form of analog signals, the audio data processed by the processing means; and digital output means for outputting the digital data processed by the processing means.

This automotive information system may further comprise A/D conversion means for converting analog signals supplied from the devices into audio data in the form of digital signals.

The plurality of devices may include a radio tuner and/or a microphone.

In the automotive information system of the type described above, analog signals derived from the radio tuner or the microphone are converted into audio data in the form of digital signals, and the digital audio data thus obtained are digitally transmitted and processed together with other digital data.

The transmission means may include a PCI BUS. In such a case, the data is transmitted through the PCI BUS that interconnects the peripheral devices, so that various kinds of digital data an be unitarily administrated. In addition, wider variety of devices can be incorporated in the automotive information system when the PCI BUS is used.

The transmitting means may also include data destination determining means which determines destination to which the data is to be transmitted, based on the device by which the data is provided. Thus, the transmission means performs traffic control as to the source and destination of various data. A circuit such as ASIC performs this traffic control, thus facilitating unitary management of the data.

The automotive information system of the fifth aspect may further comprise a digital sound processor. Since the audio data if analog is converted into digital signals, the audio data in the form of digital signals is conveniently processed by the digital sound processor. This permits various functions such as equalizing, volume control, balancing and fading to be easily implemented in a contactless manner with high grade or quality.

The audio output means may includes D/A conversion means for effecting D/A conversion to convert the processed audio data into analog signals, and an amplifier for enabling the analog signals to activate a speaker. In this case, the audio data is unitarily controlled in digital form and then converted into analog signals, whereby the analog processing of the audio data is minimized, with the result that the audio characteristic is stabilized.

The digital output means may include an operation display section for outputting the processed digital data. This feature enables the user to easily operate the information device such as the car audio system, while monitoring characters and images formed of digital data and displayed on the operation display section.

The automotive information system of the fifth aspect may further comprise connecting means £or connecting the plurality of devices of the automotive information system in a daisy-chain fashion.

The daisy-chain type connection of the information devices, achieved by connecting these devices in a manner like a sweet-potato-vine, enhances the degree of freedom in the selection of locations of the information devices. This permits easier setting of the devices than in the case of a star-type connection in which long cables are concentrated to a central hub. This also affords simple and neat wiring layout, allowing easy modification and protective maintenance, as wall as repair.

The arrangement may be such that the above-mentioned connecting means includes a USB, while the transmission means includes a PCI BUS. In this case, the automotive information system further comprises form conversion means for converting the audio data and the digital data transmitted through the USB into data of a form adapted for the PCI BUS.

The USB provides a rather low transmission rate, although it permits daisy-link-type transmission. Transmission of data from the information devices is conducted by using this USB. The data transmitted through the USB is then subjected to a form conversion so as to be changed into data of a form that is suitable for transmission and processing through the PCI BUS which provides comparatively high transmission rate. It is thus possible to make an effective use of the merits of both types of BUSes, by virtue of the conversion of the data form.

In the automotive information system of the fifth aspect, the plurality of devices may include at least one of a CD-ROM auto-changer for reading data from music CDs and CD-ROMs while changing the CD or the CD-ROM from one to another, an alarm system for security purpose, and an automotive telephone system.

This automotive information system has a variety of uses. For instance, it is possible to read from a CD-ROM various kinds of digital data to be used by the car navigation system. It is also possible that the security system informs the driver of any extraordinary event via the automotive mobile phone. In particular, a multi-function automotive information system can be implemented with a simple wiring layout, by employing the aforementioned daisy-chain type wiring connection.

In accordance with the sixth aspect of the present invention, there is provided a method of controlling an automotive information system having a plurality of devices, comprising the steps of: causing the plurality of devices to supply at least one of audio data and digital data; transmitting, in the form of digital signals, the audio data and digital data supplied by the devices; processing the digital data and the audio data in the form of digital signals; outputting the processed audio data in the form of analog signals; and outputting the processed digital data.

In accordance with this controlling method, audio data such as music audio data, as well as character and image data which are inherently digital data, are sent in the from of digital signals to a data processing section. This serves to reduce the number of connectors and connecting cords for each information device, thus simplifying the wiring layout and facilitating work for accomplishing the connection in the system, as well as protective maintenance and repair. The audio data, which is transmitted in the form of digital signals, is less likely to be affected by change in the environmental conditions such as temperature and humidity, whereby the audio characteristic is stabilized.

The above an other objects, features and advantages of the present invention will become clear from the following description of the preferred embodiments when the same is road in conjunction with the accompanying drawings.

### BRIEF DESCRIPTION OF THE DRAWINGS

Fig. 1 is a block diagram showing the overall configuration of an automotive information system embodying the present invention; and
Fig. 2 in a block diagram showing the internal structure of a main unit of the automotive information system.

### DESCRIPTION OF THE PREFERRED EMBODIMENTS

A preferred embodiment of the automotive information system in accordance with the present invention will now be described with reference to the drawings. The automotive information system includes various information devices such as a CD player, and a computer which has a general-purpose OS such as that used in handheld computers and which controls the information devices of the system. Throughout the drawings, the same devices, components and so forth are denoted by the same reference numerals.

### 1. Configuration

### 1-1. Overall configuration

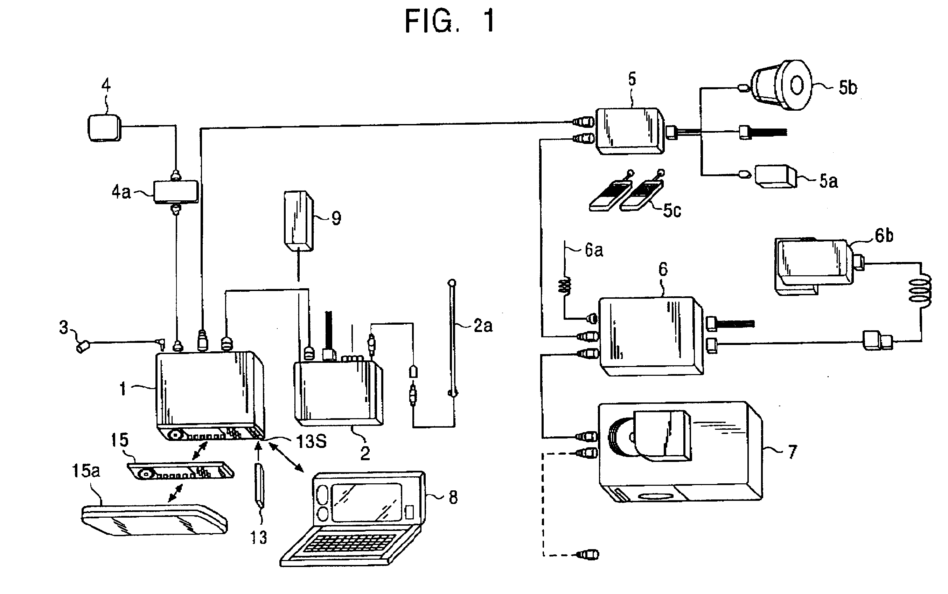

Referring first to Fig. 1 showing the overall configuration of the embodiment, the automotive information system has a main unit 1 and various information devices including a tuner amplifier unit 2, a microphone 3, a GPS antenna 4, a security control unit 5, a telephone unit 6, a CO-ROM auto-changer 7, and an auxiliary battery 9 serving as a backup power.

The main unit 1 incorporates a controlling computer that performs overall control of the whole system. The tuner amplifier unit 2 includes an AM/FM antenna 2a and, although not shown, a radio tuner and an amplifier for activating a speaker. The microphone 3 19 used to input user's voice for the purpose of voice recognition which is implemented by a program in the computer. The tuner amplifier unit 2, microphone 3, GPS antenna 4, security control unit 5, telephone unit (automotive mobile phone) 6, and the CD-ROM auto-changer 7 collectively serves as devices that provide at least one of audio data and digital data, 1-1-1. Main unit

The main unit 1 has a socket 13S for receiving a compact flash card 13, and a detachable face plate unit 15. The compact flash card 13 is a storage medium employing a storage medium, and is capable of reading and writing data from and into the main unit 1 when received in the socket 135. The compact flash card 13 is used for the purpose of exchanging data and programs between the computer of the main unit 1 and other external computers, as well as for the purpose of backing up various data set on the automotive information system.

The detachable face plate unit 15 has a display section which visually presents various kinds of information to the user, and an operating section including keys to be operated by the user. The face plate unit 15 may be a large-sized color LCD (Liquid Crystal Display), e.g., 256 dots in horizontal direction and 64 dote in vertical direction.

The user can detach the face plate unit 15 and carry it with him when leaving the automobile. This produces an anti-theft effect. Namely, any person who wish to steal the car audio system or other devices of the information system will despair of stealing when he understands that the device without the display and operating section has no commercial value. It is advisable that a suitable case 15a for accommodating the detached face plate unit 15 is prepared so as to prevent damaging of the unit 15 itself or other objects which may happen to be collided by the unit 15 when the user carries the unit 15 with him.

Although not shown in Fig. 1, an infrared communication unit is incorporated in the face plate unit 15. The infrared communication unit permits exchange of data between the face plate unit 15 and a separate handheld PC 8.

### 1-1-2 Other devices

The GPS antenna 4 receives radio waves from GPS satellites. Signals caught by the GPS antenna 4 is supplied to a GPS unit in the main unit 1 via GPS receiver unit 4a. The GPS unit, which is not shown, computes the position of the GPS unit on the globe, based on the radio waves. The computer of the main unit 1 implements functions of car navigation system based on programs. The results of the Position computation are delivered to a car navigation system function.

The security control unit 5 has a sensor 5a capable of sensing vibration and impact, thus detecting any illegal attempt such as theft or mischief. Upon detection of such an attempt, the security control unit 5 produces an alarm by, for example, causing a siren 5b to go off. The telephone unit 6 controls the function of an automotive telephone, so as to enable conversation through a handset 6b and via a telephone antenna 6a. A plurality of CDs are installed on the car audio system which is part of the automotive information system. The CD-ROM auto-changer changes the CD on playback position from one to another automatically or in accordance with instruction given by the user, so that the disk selected by the user is played back.

### 1-1-3 Daisy chain connection

The security control unit 5, the telephone unit 6 and the CD-ROM auto-changer 7 are connected to the main unit 1 by means of an USB (Universal Serial Bus). This USB serves as a serial BUS (third BUS) that interconnects the plurality of devices in a daisy-chain fashion. This USB also is termed as the connecting means that interconnects the plurality of devices in the daisy-chain fashion.

In this embodiment, each of the devices that are connected through the USB is adapted to transmit and receive date to and from other device in a form that conforms with the USB. For example, the arrangement is as follows. The CD-ROM auto-changer 7 has upstream and downstream hubs. In the CD-ROM auto-changer 7, digital data is read from a music CD or a CD-ROM in an ATAPI fashion (parallel form). The data thus read is then converted into a serial form that conforms with the USB and is delivered to the USB.

Thus, the security unit 5, telephone unit 6 and the CD-ROM auto-changer 7 are serially connected. This makes it easy to locate these units 5, 6 and 7 at positions remote from one another as required. Although in Fig. 1 the security unit 5, telephone unit 6 and the auto-changer 7 are connected serially in the mentioned order, this is only illustrative and the order of connection may be changed as required. Likewise, it is not essential that all these three units 5, 6 and 7 are connected: namely, one of them may be excluded from the serial connection.

### 1.2 Internal structure of the main unit

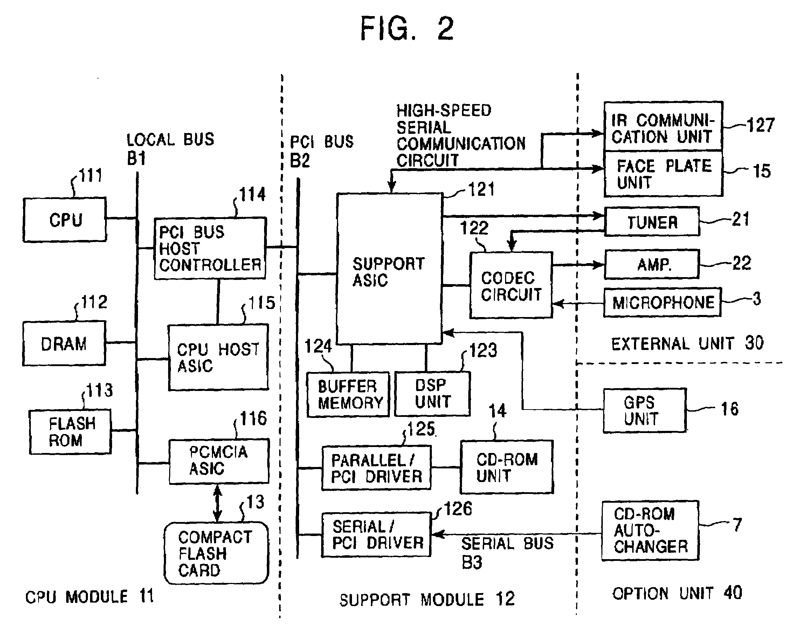

Fig. 2 is a block diagram showing the major components of the automotive information system. It will be seen that the arrangement shown in Fig. 2 is divided by broken lines into four sections: namely, a CPU module 11 which is at the left-hand side of the drawings, a support module 12 which is at the middle, external unit 30 at the right upper section and option unit 40 shown at the right lower section. The CPU module 11 and the support module 12 are incorporated in the main unit 1.

The term "external unit 30" collectively refers to external units that are connected to the main unit 1. Likewise, the term "option unit 40" collectively refers to option units that are connectable to the main unit 1. In Fig. 2, the compact flash card 13 is shown at the bottom of the CPU module 11, while the face plate unit 15 is shown at an upper part of the external unit 30, for the sake of convenience of explanation.

The CPU module 11 and the support module 12 in combination constitute the controlling computer that performs overall control of the whole information system. More specifically, the CPU module 11 is constituted mainly by a CPU 111 and is adapted to conduct logical computations and processings, while the support module 12 controls the delivery and receipt of data to and from other units that constitute the automotive information system.

In the CPU module 11, a local BUS B1 (referred to also as a "first BUS"), formed around the CPU 111, serves as a major path for data transmission, whereas, in the support module 12, a major path of data is constituted by a PCI (Peripheral Component Interconnect) BUS B2 which interconnects the devices or units of the automotive information system and which is referred to also as a "second BUS".

### 1-2-1 Configuration of CPU module

The local BUS B1 of the CPU module 11 is of the type which conforms with the type of the CPU 111. To this local BUS B1 are connected a DRAM 112, a flash ROM 113, a PCI BUS host controller 114, a CPU host ASIC 115, and a PCMCIA·ASIC 116. The DRAM 112 provides a work area such as a variable area that is used by the CPU 111 when the latter controls the automotive information system.

The flash ROM 113 is a rewritable ROM which stores software in general sense, including an OS, BIOS and application program. The OS stored in the flash ROM 113 has functions such as administration of resources available on the computer, control of input and output including the user interface, execution of predetermined programs, and so forth. For instance, the OS may be formed based on the general purpose OS known as Windows CE mentioned before.

The PCI BUS host controller 114 interconnects the local BUS B1 end the PCI BUS B2, and performs conversion of data exchanged between these two types of BUSes, so as to make the data conform with the BUS to which the data is to be delivered.

To explain in more detail about the CPU host ASIC 115, the term "ASIC" is an abbreviation of "Application Specific Integrated Circuit". More specifically, ASIC is a circuit such as an IC or an LSI designed for a specific use, in contrast to general-purpose ICs such as a ROM, RAM or CPU.

The CPU host ASIC 115 serves as an interface between the local BUS B1 and the PCI BUS host controller 114. The CPU host ASIC 115 therefore serves as an entrance or exit for the data to be exchanged between the PCI BUS B2 and the CPU module 11. More specifically, the CPU host ASIC 115 works in lieu of the CPU 111 so as to conduct input and output of data to and from the CPU module 11 and, in addition, selects data to be delivered to the CPU 111 from among various kinds of data received from the PCI BUS B2.

The CPU host ASIC 115 delivers the selected data to the CPU 111 via the local BUS B1. Other data the those selected are the data which need not be processed by the CPU 111, i.e., data that needs to be responded by predetermined reactions. When such other data is received, the CPU host ASIC responds to this data by giving the predetermined reaction.

The PCMCIA·ASIC 116 provides an interface adapted for the data delivered to and from the compact flash card 13 which is a kind of so-called PC card that meets the standards of PCMCIA (Personal Computer Memory Card International Association). Thus, the PCMCIA·ASIC 116 controls writing and reading of data to and from the compact flash card 13.

### 1-2-2 Configuration of support module

The PCI BUS B2 of the support module 12 is used for exchanging data between the CPU module 11 and various devices constituting the automotive information system. Thus, the PCI BUS B2 serves as transmission means that transmits audio data and digital data from the devices of the system, both the audio data and the digital data being transmitted in the form of digital signals. To the PCI BUS B2 are connected the external unit 30 which collectively refers to a plurality of units or devices and the option unit 40 which also collectively refers to a plurality of units or devices.

More specifically, the external unit 30 is separate from the main unit shown in Fig. 1. In this embodiment, the external unit 30 includes the face plate unit 15 that is detachable from the main unit 1, the tuner 21 and the amplifier 22 that are included by the tuner amplifier unit 2, and the microphone 3. The face plate unit 15 is equipped with the infrared communication unit 127 mentioned before.

The option unit 40 includes devices or units that can be selected by the user. Namely, whether such devices or units are to be incorporated in the automotive information system is determined by the user. In this embodiment, the GPS unit 16 ad the CD-ROM auto-changer 7 are the option components. The CD-ROM unit 14, that is incorporated in the main unit 1, also is connected to the PCI BUS B2. This CD-ROM unit 14 a player which reads data from a CD or a CD-ROM. If the CD is a music CD, audio data is read by the CD-ROM unit 14. Both the CD-ROM auto-changer 7 and the CD-ROM unit 14 are compatible in that they are capable of reading music data from the music CD and reading data from a CD-ROM.

Exchange of data between the PCI BUS B2 and the devices or units connected thereto is performed in the support module 12, by using a support ASIC 121, a CODEC circuit 122, a DSP unit 123, a buffer memory 124, a parallel/PCI driver 125, and a serial/PCI driver 126.

The support ASIC 121 is a circuit that determines the destination of the data exchanged between the support module 12 and the units or devices connected thereto. Thus, the support ASIC 121 performs a traffic control of the data between the support module 12 and the devices or units. As to the CODEC circuit 122, the term "CODEC" is an abbreviation of "Coder/Decoder", i.e., coding and decoding of data. For instance, the CODEC circuit 122 performs D/A conversion for converting data in the form of digital signals into analog signals and A/D conversion for converting analog signals into digital data. Thus, the CODEC circuit 122 serves as the A/D conversion means that converts analog signals derived from the units or devices into audio data having the form of digital signals, and serves also as D/A conversion means that converts the digitally processed audio data into analog signals. This CODEC circuit 122, together with the amplifier 22 for activating the speaker with the analog signals, form the audio output means.

As to the DSP unit 123, the term "DSP" is an abbreviation of Digital Sound Processor, i.e., a circuit which exclusively processes digital sound signals. Upon receipt of audio digital data such as music data, the DSP unit 123 processes the audio digital data in such a manner that the produced sound conforms with the conditions set in the audio system, such as the balance between left and right sounds, volume, fader, surround and equalizer.

The cycle time of reading and writing data through the PCI BUS B2 is different from that of the acoustic instrument such as the CD-ROM unit. The buffer memory 124 accommodates this difference by storing data and outputting the data bit by bit. The buffer memory 124 is constituted by, for example, an SRAM.

The parallel/PCI driver 125 serves to transform the parallel audio data or parallel digital data sent from the CD-ROM unit 14 into data that conforms with the PCI BUS B2. The serial/PCI driver 126 serves as data form conversion means that converts serial audio data and serial digital data transmitted in the form that conforms with the USB into data of the form that conforms with the PCI BUS B2.

The face plate unit 15 including the infrared communication unit 127 is connected to the support ASIC 121 via a high-speed serial communication circuit. The GPS unit 16 also is connected to the support ASIC 121 via a parallel communication circuit such as an asynchronous serial communication circuit such as an UART (Universal Asynchronous Receiver-Transitter). The CD-ROM unit 14 is connected to the parallel/PCI driver 125, through a parallel communication circuit such as an ATAPI (At Attachment Packet Interface). Although not shown, a ASIC that undertakes exchange of data by means of infrared rays is provided in the infrared communication unit 127. The CPU module 11, together with the CODEC circuit 122, DSP unit 123 and the buffer memory 124 of the support module 12, forms the processing means that processes digital data and audio data in the form of digital signals.

### 2. Operation

The operation of the embodiment having the described configuration is as follows.

### 2-1 Overall operation

### 2-1-1 Input of data

Among various types of data received from the units or devices, digital data ore directly delivered to the support ASIC 121 of the support module 12. For instance, data identifying the key touched by the user is derived from the face plate unit 15. Digital data such as longitude and latitude, computed based on the radio waves from GPS satellites, are derived from the GPS unit 16. The infrared communication unit 127 of the face plate unit 15 delivers digital data transferred from the handheld personal computer 8 by way of infrared rays.

The CD-ROM unit 14 and the CD-ROM auto-changer 7 reads data from a music CD or from a CD-ROM. The audio data road from the music CD or the digital data read from the CD-ROM is delivered to the PCI BUS B2 after being converted into a form conforming with the PCI BUS 2 by means of the parallel/PCI driver 125 or the serial/PCI driver 126. The data thus converted is sent to the support ASIC 121 through the PCI BUS B2.

Digital data indicating occurrence of an extraordinary event is sent from the security control unit 5 shown in Fig. 1. Likewise, character data in the form of digital signals, indicating receipt of a telephone call and the telephone number of the caller is transmitted from the telephone unit 6 shown in Fig. 1. During the telephone conversation, audio data, i.e., voice data, representing the talk of the caller is delivered to the ASIC 121.

The security control unit 5 and the telephone unit 6 are connected to the serial BUS B3 in a daisy-chain fashion. The information sent from the security control unit 5 and the telephone unit 6 is transmitted through the PCI BUS B2, after being converted into a form that conforms with the data form of the PCI BUS 2 by the serial/PCI driver 126, as in the case of the audio data and digital data received from the CD-ROM auto-changer.

Among various types of data received from the units or devices constituting the automotive information system, data in the form of analog signals is delivered to the CODEC circuit 122 so as to undergo an A/D conversion. The data thus converted into digital data is then delivered to the support ASIC 121. Examples of such data received in the form of analog signals are the analog signals representing the user's voice picked up and delivered by the microphone 3, and the analog radio broadcast signals received as a result of tuning performed by the tuner 21 and sent therefrom,

### 2-1-2 Destination of input data

The support ASIC 121 performs a traffic control so as to determine the destination of various kinds of information received from various units or devices. Briefly, the data received from various units or devices in this embodiment are classified into two types: namely, sound data and other kinds of data. The support ASIC 121 directs the sound data to the DSP unit 123 and, after being processed by the DSP unit 123, sent to the amplifier 22 via the CODEC circuit 122, whereas the data other than the sound data is sent to the CPU module. It is to be noted, however, the sound data that is received from the microphone 3 is sent to the CPU module 11 for the purpose of voice recognition.

Examples of the sound data that are delivered to the amplifier 22 are the radio broadcast sound data tuned by the tuner 21, sound data of music read from a music CD by means of the CD-ROM unit 14 or the CD-ROM auto-changer 7, and the sound data representing the voice of a telephone caller received through the telephone unit 6.

Examples of the data other than the sound data are: data indicating which one of the keys on the face plate unit 15 has been pressed by the user: file data or other data received via the infrared communication unit 127; digital data indicating longitude and latitude received from the GPS unit 16; car navigating map data and other guiding information read from a CD-ROM by the CD-ROM unit 14 or the CD-ROM auto-changer 7; data informing occurrence of extraordinary event, received from the security controller 5; and the data indicating receipt of a telephone call and data indicating the telephone number of the caller, sent from the telephone unit 6.

### 2-1-3 Information processing performed by CPU module

Upon receipt of digital data from the support ASIC 121, the PCI BUS controller 114 of the CPU module 11 converts the received data into a form that conforms with the date form of the local BUS B1, and delivers the converted data to the CPU host ASIC 115. The CPU host ASIC 115 conducts input and output of data in place of the CPU 111. More specifically, the CPU host ASIC 115 determines whether the received data is to be delivered to the CPU 111 or otherwise, based on the form of the data and other factor.

Thus, when the received data is such one that essentially requires a fixed response without requiring any processing, sub a fixed response is sent by the CPU host ASIC 115 back to the support module 12 via the PCI BUS host controller 114. Other kinds of data, i.e., data that require any processing, is directed to the CPU 111.

The CPU 111 processes the data in accordance with the codes of the OS and the programs stored in the flash ROM 113, using the DRAM 112 as a storage area such as work area necessary for the processing. For instance, the CPU 111 upon receipt of data representing user's voice input through the microphone 3 compares the received voice data with parameters and voice waveforms of various instructional words that have been stored beforehand. The CPU 111 then determines, based on the result of matching of parameters and waveforms, the instructional word actually input by the user, and performs operations in accordance with the thus determined instructional word.

Writing and reading of data to and from the compact flash card 13 is conducted in the CPU module 11 in compliance with a request given by the CPU 111. More specifically, such writing and reading is commanded by the PCMCIA·ASIC 116 which in turn is under the control of the CPU host ASIC 115.

The results of the information processings performed by the CPU 111 are sent to the support module 12 via the PCI BUS B2, after being converted into a form that conforms with the data form of the PCI BUS B2 by means of the PCI BUS host controller 114. Examples of the data that are sent to the support module 12 as the results of the information processings are instruction concerning operations of various portions of the support module 12 or the units or devices constituting the information system. The support module 12 conducts processings such as input and output of data, in accordance with the data received as the results of the information processings.

### 2-1-4 Processings such as input/output processing performed in support module

When instructions requesting reading of data from a CD or tuning of the radio are received from the CPU module 11, the CD-ROM unit 14, the CD-ROM auto-changer 7 and the tuner 21 performs operations in accordance with the instructions. When instructions are received from the CPU module 11 requesting change-over of the source of the sound which it output from the speaker, the support ASIC 121 performs a switching operation so that the audio data supplied to the CODEC circuit 122 is switched from audio data derived from one sound source unit to audio data derived from another sound source unit.

The amplifier 22 exclusively deals with analog signals. When audio data that has been digitized is to be delivered to the amplifier 22, such audio data in the form of digital signals is converted into analog signals through a D/A conversion performed by the CODEC circuit 122, and is then delivered to the amplifier 22.

The support ASIC 121, upon receipt of data which is to be displayed for visual recognition by the user and which is derived from the CPU module 11 or other unit or device, delivers the display data to the face plate unit 15 via the high-speed serial communication circuit. The face plate unit 15 then forms visual information based on the received display data and displays the information on its display section for visual recognition by the user.

A description will now be given the kinds of services or functions offered to the user by the above-describe operations of the respective portions of the automotive information system.

### 2-2 Display of operations and information

The user can operate the automotive information system either by pressing keys arranged on the face plate unit 15 or by pronouncing predetermined words corresponding to respective kinds of services or functions. For instance, the user can enjoy services available from a CD, either by pressing an operation key for switching the information source to the CD or by uttering a word "Si-Di" (CD) such that the voice can be caught by the microphone. Similarly, the user can select the FM tuner by pressing a key for tuning to FM waves, or by pronouncing "Efu-Emu" (FM).

When a key is pressed by the user, data concerning the key operated by the user is transferred from the support ASIC 121 to the CPU module 11, so that the CPU 111 forms new display data which is sent to the face plate unit 15 via the support ASIC 121. Accordingly, the display section of the face plate unit 15 forms an image such as that for enabling radio operation or CD player operation based on the display date, end displays this image to enable the user to operate the radio or the CD player.

In contrast, the voice instructions given by the user such as "Si-Di-" is picked up by the microphone 3 which forms audio data in the form of analog signals corresponding to the voice instructions. This analog audio data is concerted by the CODEC circuit 122 into audio data of digital form. The digital audio data thus obtained is rent from the support ASIC 121 to the CPU 111 via the PCI BUS controller and the CPU host ASIC 115. Based on the audio data of digital form, the CPU 111 recognizes the word uttered by the user and, based on the result of the recognition, performs the same operation as that performed in response to pressing of the key.

The arrangement may be such that the display section of the face plate unit 15 is constructed as a touch panel, and a graphical user interface for the computer is presented by icons displayed on the touch panel and corresponding to functions available when the user interface is used. Thus, a function is activated when a user's finger touches at an icon corresponding to the function and displayed on the touch panel. It is possible to combine the above-described graphical user interface with the voice recognition function described before. For instance, a plurality of display screens each containing a group of icons are prepared and used selectively such that, when the user utters a word "Ne-Ku-So-To" (Next), the display screen is switched to the next one, whereas, when a word "R-Ta-A-N" (RETURN) is uttered, the display screen is switched back to the screen that immediately precedes the screen now on display.

### 2-3 Listening to radio

As stated above, the user can select the FM broadcast service by uttering the word "Efu-Emu" (FM). When this voice input is recognized by the CPU 111, the support ASIC 121 switches the tuner 21 to a mode for selecting FM waves, in response to an order given by the CPU 111. The support ASIC 121 also performs switching of the source of the data to be delivered to the amplifier 22, such that voice data from the tuner 21 is supplied to the amplifier 22. The arrangement may be such that the tuner 21 receives the wave of the frequency to which the receiver was tuned when the FM broadcast service was selected last time. It is also possible to implement on automatic sweeping function such that frequencies to which the receiver is tuned are sequentially chased by a stepwise change of tuning frequencies in response to a word "Si-I-Ku Appu" (SEEK-UP) pronounced by the user.

When the automotive information system has been set to enable the user to listen to the radio, the received broadcast data is sent in the form of analog signals from the tuner 21. These analog signals are input to the CODEC circuit 122 so as to be changed into audio data of digital form. The digital audio data thus obtained is then delivered to the support ASIC 121. The support ASIC 121 delivers the digital audio data to the DSP unit 123 which processes the digital audio data in accordance with conditions such as the balance, volume and so forth that have been set on the system. The DSP unit 123 then sends the processed digital audio data back to the support ASIC 121.

The support ASIC 121 sends the digital audio data back to the CODEC circuit 122 that converts the digital audio data again into analog signals. The analog audio data thus obtained is sent to the amplifier 22, whereby audio output is produced by the speaker.

### 2-4 Playback of CD

The user wishing to listen to a music reproduced from a music CD sets the desired music CD on the CD-ROM unit 14 or the CD-ROM auto-changer 7, and inputs playback instructions by, for example, uttering a word "Su-Ta-A-To" (START) or by giving instructions to skip to the next music.

For instance, for the purpose of playing back a music CD in the CD-ROM unit 14, the CO-ROM unit 14 operates in accordance with instructions given by the support ASIC 121, whereby audio data in digital form is produced and delivered by the CD-ROM unit 14.

This digital audio data is converted by the parallel/PCI driver 123 into a form that conforms with the data form of the PCI BUS B2, and the thus converted digital audio data is cent to the support ASIC 121 via the PCI BUS B2. Upon receipt of the digital audio data from the PCI BUS B2, the support ASIC 121 delivers the data to the DSP unit 123 So that the digital audio data is processed by the DSP unit 123. The digital audio data after the processing is sent from the DSP unit 123 back to the support ASIC 121 which in turn delivers the processed digital audio data to the CODEC circuit 122 via an I/O port. The CODEC circuit 122 converts the digital audio data into analog signals which are then delivered to the amplifier 22.

If the playback of the music CD is performed by the CD-ROM auto-changer 7, the audio data in the form of serial data sent from the serial BUS B3 is converted by the serial/PCI driver 126 into data of a form that conforms with the data form or the PCI BUS B2. Thereafter, operations are performed in the same way as those in the playback performed by the CD-ROM unit 14.

Playback devices such as the CD-ROM unit 14 and the CD-ROM auto-changer 7 produce and send comparatively large volumes of data in comparatively long cycle times, while the CODEC circuit 122 and the DSP unit 123 process data bit by bit with much shorter processing cycle time. Consequently, a difference in cycle time exists between the playback devices such as the CD-ROM unit 14 end the CD-ROM auto-changer 7 produce and the data processing means such as the CODEC circuit 122 and the DSP unit 123. It is necessary to accommodate this difference in cycle time, in order that the audio data is smoothly reproduced. To this end, the support ASIC 121 operates such that a batch of data sent from the CD-ROM unit 14 or the CD-ROM auto-changer 7 is stored in the buffer memory 124, and data is picked up bit by bit from the batch of data and delivered to the DSP unit 123 in the order of time, i.e., such that the oldest data is processed first followed by processing of the data which is next to the oldest.

### 2-5 Use of CD-ROM and car navigation system

When the user wishes to use a function of the car navigation system, the user sets in, for example, the CD-ROM unit 14 a CD-ROM which stores car navigation data including application software, map data and so on. The user than starts the car navigation function. The car navigation function may be implemented by a program to be executed by the computer. In such a case, the program is stored in the flash ROM of the CPU module 11, and is executed by the CPU 111 as required.

When the car navigation system is used to read data recorded in the CD-ROM such as map data and other data concerning various kinds of regional information, the data is read by, for example, the CD-ROM unit 14, and the thus read digital data is delivered to the CPU 111 via the parallel/CPI driver 125, PCI BUS host controller 114, and the CPU host ASIC 115. Upon receipt or the data such as the map data, the CPU 111 develops a bit map image on the DRAM 112 based on the received data, in order that the map is displayed on the face plate unit 15. The bit map image is then transmitted to the support module 12.

When the car navigation system is used, radio waves from GPS satellites are caught by the GPS antenna 4 shown in Fig. 1, and the GPS unit 16 shown in Fig. 2 computes the position in terms of longitude and latitude based on the received waves. The position data obtained through this computation is sent to the CPU 111. Based on the position data including the longitude and latitude, the CPU 111 performs computation to locate the instant position of the automobile on which the car navigation system is mounted, by showing the position on a displayed map. Thus, the instant position of the automobile is set as a starting position, so that a map is displayed centered at the instant position, as well as graphical instructions such as indication of a corner at which the automobile should turn to the left or right.

The data to be used for the car navigation may be stored in the compact flash card 13, the DRAM 112 or in the flash ROM 113.

The voice recognition function described before for commanding the automotive information system can also be employed in the car navigation. For instance, when the car navigation system is of the type which gives a guide such as turning left or right at each crossing or corner, the user can scroll or switch forward or backward the display screen by giving voice instructions such as "Ne-Ku-Su-To" (next) or "R-Ta-A-n" (RETURN), when the user wishes to see the next guiding information or immediately preceding guiding information.

The guiding information may be given in the form of synthesized voice message via the amplifier 22. Such a voice guiding function relieves the driver from the burden of glancing the display again and again in order to know the crossing or corner at which the automobile should turn next time.

### 2-6 Use of telephone

The user on the automobile can communicate with a distance person through the telephone unit 6. In such a communication, the merits of both the computer and the car audio system are utilized as follows. For instance, the user registers, in the DRAM 112 or in the compact flash card 13, names and telephone numbers of the acquaintances, by using the program on the computer.

When a telephone call is received, digital data indicating receipt of the call and digital data indicating the telephone number of the caller are delivered by the telephone unit 6 to the support ASIC 121 via the serial BUS B3 and the serial/PCI driver 126. These digital data are sent to the CPU 111 of the CPU module 11. The CPU 111 retrieves the registered telephone numbers to find whether or not the telephone number of the caller exists in the list of the registered telephone numbers.

If the caller's telephone number is found in the list, the CPU 111 sends data indicating the name of the person corresponding to the telephone number thus found in the list back to the support module 12. The name of the caller is then displayed on the face plate unit 15 or announced by a voice message stating "PHONE CALL FROM MR. XXX", so that the user can be informed of the name of the person who is calling.

The user is thus informed of the receipt of the call and the name of the caller by the visual or voice message or by a specific calling signal or tone. The user then vocally gives instructions to connect the caller to the user, so that the telephone is hung on, whereby the caller's voice is output from the speaker. At the same time, the user's voice is picked up as analog data through the microphone 3 and is digitized by the CODEC circuit 122. The digital audio data thus obtained is sent to the telephone unit 6 via the support ASIC 121, serial/PCI driver 126 and the serial BUS B3, whereby a hand-free conversation is conducted without requiring the user to use his hand.

The arrangement may be such that a message-keeping function prepared in the telephone unit 6 or the CPU module 11 automatically responds to the telephone call after a predetermined number of calling signal sounds are produced.

The user can call up a person through the telephone unit 6 as follows, For instance, names and telephone numbers registered in the list are displayed sequentially one after another on the display screen, and the user gives calling instructions by touching a "calling-up" icon on the display when the name and the phone number of the person to whom the user would like to be connected is shown on the display. As a result, the telephone number in the form of digital data is transferred from the CPU module 11 to the telephone unit 6, whereby the calling function is automatically triggered to call up the designated person. The user is then allowed to communicate with the person when the person is on the telephone.

Telephone calling function also may be implemented such that the user pronounces a registered name, so that the name to recognized by the voice recognition function, so that the CPU 11 serves to automatically dial the telephone number corresponding to the recognized name. Alternatively, the under pronounces the telephone number in a digit-by-digit fashion, so that the number is recognized by the voice recognition function and the recognized number is ringed up. It is also possible to arrange such that the user utter a word "RI-DAIARU" (REDIAL), so that the redialing request is vocally recognized to trigger redialing to the same phone number.

### 2-7 Use of security control unit

The security control unit 5 may stand alone or may be operatively associated with the telephone unit 6 mentioned above. For instance, referring to Fig. 1, the user when leaving the automobile sets the security control unit 5 operative and carries the transmitter 5c with him. Impacts or vibrations produced by any unlawful attempt by unauthorized person, such as touching at a door knob, picking a key hole, forcing a door or trunk lid open, or moving the automobile, is sensed by the sensor 5a. The security control unit 5, upon receipt of a signal from the sensor 5a, operates to allow an alarming means such as a siren to go off loudly, whereby occurrence of unlawful event is informed to the surroundings.

The user when returning to the automobile operates the transmitter 5c, so that a predetermined secret code is transmitted to the security control unit 5 to dismiss the security function. The siren therefore does not goes off even if the user uses the key or drive the automobile.

The security control system 5 can function more effectively when combined with the telephone unit 6. For instance, the security control unit 5 not only activates the siren but also produces an interrupt signal when any abnormal state is sensed by the sensor 5a. The interrupt signal starts the automotive information system including the CPU module 11 and the support module 12. To this end, an interrupt monitoring circuit connected to the power supply of the automotive information system and a start switch way be used. The monitoring circuit keeps watching to detect the interrupt signal and, when the interrupt signal is detected, turns the power supply and the start switch on, thereby starting the automotive information system including the CPU 111.

Upon receipt of the data indicative of occurrence of an extraordinary event sent from the security control unit 5, the CPU 111 gives instructions to the telephone unit 6 so as to cause it to ring up a telephone that has been registered as where to contact in case of emergency, e.g., police, mobile telephone carried by the user, a security company, or the like. When the telephone unit is hung on at the opposite station, e.g., at the police, synthetic voice message or a recorded voice message is automatically sent thereto to inform occurrence of extraordinary event. The person informed of occurrence of such an event can hasten to the site.

### 2-8 Use of utility programs

The computer of the automotive information system may be loaded with various utility functions such as an address book function, calendar function, schedule managing function, voice recording, timepiece function, calculator function, game function and so forth, implemented by the OS or application programs, as in the case of ordinary handheld personal computers. The user while on board can conduct various kinds of work by making effective use of these functions. Application programs implementing such functions may be removed, replaced with another program or a new application program may be added, so that the user can set up information processing environment that best suits to the user.

### 2-9 Use of compact flash card

Exchange of information is possible between the automotive information system and other information device such as a handheld personal computer or another automotive information system, by making an efficient use of the compact flash card 13.

For instance, a new application program or a new OS can be read from the compact flash card 13 and written in the flash ROM 113. This facilitate addition of new functions and updating of the OS. In particular, the use of the general-purpose OS permits ordinary software developers to easily form function modules based on the application programs and the OS. Compact flash card 13 storing such a function module becomes available correspondingly easily, so that the users can use the automotive information systems more conveniently, in the same sense as ordinary personal computers.

personal data such as address book prepared by using an ordinary personal computer or handheld computer may be transferred to the automotive information system by way of the compact flash card 13. The user therefore can continue the work in the automobile by using the automotive information system. Likewise, data formed by using the automotive information system can be transferred to other computers such as an ordinary personal computers or handheld computers, by making use of the compact flash card 13.

The data formed on the automotive information system by using aforesaid functions may be copied on the compact flash card 13. Such a copy can effectively be used as backup data. When data on the automotive information system has been extinguished accidentally due to, for example, a malfunction of the system, the backup data is read from the compact flash card 13 so as to be written in the main unit 1, whereby the original data are restored.

When an automobile is used by a plurality of persons, e.g., family members, each user can set up various conditions of the automotive information system in accordance with his favor, and can store a backup copy of the set conditions in his own compact flash card 13. When he uses the automobile, he inserts the compact flash card 13 in the main unit 1, so that his favorite conditions are restored even when the conditions have been changed by another person who used the automobile during the interval. Each usr therefore can use the automotive information system always under the best conditions.

### 2-10 Communication with separate handheld personal computer

In this embodiment, exchange of data between the automotive information system and a separate handheld computer 8 can easily be performed by means of the infrared communication unit 127, without requiring troublesome work such as the insertion and withdrawal of the compact flash card 13 or connection by means of a connector cable. Thus, various kinds of work can be conducted, such as updating of the OS or the application programs by using files stored in the handheld personal computer 8, transfer or personal data such as address book formed on the automotive information system directly to the handheld personal computer 8, making backup data for such personal data in a comparatively large storage area available on the handheld personal computer 8, transfer of conditions set on one automotive information system to the automotive information system on another automobile, and so on.

As will be understood from the foregoing description, various advantages are offered by the present invention, as stated below.

Firstly, it is to be noted that, in the described embodiment of the present invention, the computer used for controlling the automotive information system has a general-purpose OS that administrates the resources such as a CPU and memories of the computer so as to permit full use of the ability of the computer. The general-purpose OS also provides a user-friendly standardized user interface which is easy to use and which has no dependency on the programs. Further, the general-purpose OS permits addition or modification of a program having a predetermined form, thus facilitating addition or modification of the functions to be performed by the computer. For these reasons, the general-purpose OS serves to facilitate the control of complicated automotive information system.

At the same time, the computer having general-purpose OS and combined with automotive information devices enables the user to utilize various kinds of programs, provided that such programs are supported by the OS. The user therefore can conduct information processing by using the facilities of the automotive information system such as the display unit, operation keys, speaker and so forth. Obviously, the user can store his personal data by making use of the memory of a size well comparing with that of a handheld personal computer, and to edit the data in the same sense as that on ordinary personal computer.

In the described embodiment, the CPU of the computer and the information devices of the information system use different BUSes that are adapted to the CPU and the information devices, respectively. When data is exchanged between these different BUSes, conversion of the form of data is executed as necessary. Therefore, the CPU having high operation speed is not required to keep pace with operation cycles of the information devices that operate at much lower speeds than the CPU. Therefore, the CPU is allowed to quickly perform complicated processings by, for example, efficiently making access to memories. Further, the risk of conflict between the data handled by the CPU and the data handled by the information devices, which may occur when a single BUS is used commonly both by the CPU and the information devices, can be avoided, whereby the computer and the information devices can operate smoothly without being interfered by each other.

It is also possible to easily conduct multi-task operation such that, for example, the CPU executes a processing by using the BUS adapted to the CPU while audio signals are being reproduced by an information device such as a car audio system using another BUS interconnecting the information devices. Further, replacement of the CPU can easily be made simply by changing the BUS to another type of BUS which is adapted to the new CPU, without requiring modification or change in the arrangement of the information devices and the BUS which interconnects these devices.

The daisy-chain type connection of the information devices, achieved by connecting these devices in a manner like a sweet-potato-vine, enhances the degree of freedom in the selection of locations of the information devices. This permits easier setting of the devices than in the case of a star-type connection in which long cables are concentrated to a central hub. This also affords simple and neat wiring layout, allowing easy modification and protective maintenance, as well as repair.

In the described embodiment, all kinds of data are exchanged end processed in the form of digital data through, for example, the USB, regardless of whether the data is audio data or character or other data. This reduces undesirable effect produced by external noises or change in the environmental conditions, thus contributing to stabilization of the audio characteristic.

Further, audio data such as music audio data, as well as character and image data which are inherently digital data, are sent in the from of digital signals to each data processing section. This serves to reduce the number of connectors and connecting cords for each information device, thus simplifying the wiring layout and facilitating work for accomplishing the connection in the system, as well as protective maintenance and repair.

More specifically, the number of types and the number of pieces of the connectors to be used for each information device are reduced, so that the construction of each device is simplified. This not only reduces the cost but also serves to diminish the risk of trouble or failure. In addition, since the cords interconnecting the devices are standardized to those for digital circuits, the connecting work, maintenance, repair, and addition of a device or devices can easily be conducted, despite the use of a large number of devices. The audio data, which is transmitted in the form of digital signals, is less likely to be affected by change in the environmental conditions such as temperature and humidity, whereby the audio characteristic is stabilized. This eliminates the necessity for laborious work for readjusting the conditions of the automotive information system which otherwise may easily be caused by a change in the environmental condition.

Further, the information devices of the information system can easily be combined with the computer because all the data including audio data in the system are handled in the form of digital data. This permits easy and efficient use of the OS and resource managing function of the computer, as well as excellent user interface, thus facilitating control of the complicated automotive information system. The computer thus incorporated in the automotive information system allows various programs to run thereon, as in the case of a handheld personal computer. By using such programs with the aid of various devices of the automotive information system, the user can conduct high level of information processing work even without getting off the automobile.

In the automotive information system of the described embodiment, analog audio signals derived from the radio tuner or the microphone are converted into audio data in the form of digital signals, and the digital audio data thus obtained are digitally transmitted and processed together with other digital data.

The data is transmitted through the PCI BUS that interconnects the peripheral devices, so that various kinds of digital data an be unitarily administrated. In addition, wider variety of devices can be incorporated in the automotive information system when the PCI BUS is used. A circuit such as ASIC performs the traffic control as to the source and destination of various data, thus facilitating unitary management of the data.

Since the audio data if analog is converted into digital signals, the audio data in the form of digital signals is conveniently processed by the digital sound processor. This permits various functions such an equalizing, volume control, balancing and fading to be easily implemented in a contact-less manner with high grade of quality.

In the described embodiment, the audio data is unitarily controlled in digital form and then converted into analog signals, whereby the analog processing of the audio data is minimized, with the result that the audio characteristic is stabilized.

Further, the described embodiment enables the user to easily operate the information device such as the car audio system, while monitoring characters and images formed of digital data and displayed on the operation display section.

It is also to be noted that the daisy-chain type connection of the information devices, achieved by connecting these devices in a manner like a sweet-potato-vine, enhances the degree of freedom in the selection of locations of the information devices. This permits easier setting of the devices than in the case of a star-type connection in which long cables are concentrated to a central hub. This also affords simple and neat wiring layout, allowing easy modification and protective maintenance, as well as repair.

Transmission of data from the information devices is conducted by using USB that transmits data at comparatively low speed but permits daisy-chain type connection. The data transmitted through the USB is then subjected to a form conversion so as to be changed into data of a form that is suitable for transmission and processing through the PCI BUS which provides comparatively high transmission rate. It is thus possible to make an effective use of the merits of both types of BUSes, by virtue of the conversion of the data form.

The automotive information system has a variety of uses. For instance, it is possible to read from a CD-ROM various kinds of digital data to be used by the car navigation system. It is also possible that the security system informs the driver of any extraordinary event via the automotive mobile phone. In particular, a multi-function automotive information system can be implemented with a simple wiring layout, by employing the aforementioned daisy-chain type wiring connection.

### 4. Other embodiments and modifications

Although the invention has been described through illustration of a preferred embodiment, it is to be understood that the described embodiment is only illustrative, and various other forms are encompassed by the present invention. For instance, the OS of the computer incorporated in the automotive information system need not be the Windows CE although the latter is specifically mentioned in the foregoing description. Thus, the invention does not exclude the use of other existing OS or any OS which may become available in the future.

Further, while the described embodiment is intended for use on automobiles, the information system may also be implemented as a stationary system such as a home-use system including a stereo player. Advantages offered by the invention such as the adaptability to new application software or reduction in the overall size can also be enjoyed when the invention is incorporated in such a home-use system.

Although specific standards or specifications of various BUSes and communication circuits are mentioned in the foregoing description, such standards and specifications are only illustrative and may be substituted by other standards or specifications which provide equivalent effects. Further, the first BUS and the second BUS may be formed as internal BUSes, when the CPU module and the support module are packaged in a single chip.

In the foregoing description, many devices separate from the main unit are mentioned as being the devices that provide audio data and digital data. One or more devices, however, may be integrated to seemingly form a single unit, as in the case of the CD-ROM unit 14 incorporated in the main unit 1.

Further, the processing means may process not only the data derived from the devices constituting the automotive information system but also audio data and digital data inherently possessed by the processing means, such as the syllabic data used for voice synthesis and alarm sound. Further, the A/D conversion means for effecting A/D conversion of analog audio signals into digital audio data and the D/A conversion means for converting processed digital audio data into analog signals may be implemented by separate circuits, although in the described embodiment these conversion means are consolidated into a single CODEC circuit 122.

It is also to be understood that the automotive information system of the present invention may incorporate a wide variety of devices besides the radio tuner, microphone, CD-ROM auto-changer, security system, car navigation system and automotive mobile phone that are incorporated in the described embodiment

Other changes and modifications are still possible without departing from the scope of the present invention which is limited solely by the appended claims,

## Claims

1. An automotive information system comprising a controlling computer;
said computer having a CPU and an operating system;
said operating system including:
means for administrating resources available on said computer;
input/output controlling means including a user interface; and
program executing means for executing a predetermined program.

2. An automotive information system, comprising:
a controlling computer having a CPU;
a plurality of information devices:
a first BUS corresponding to the form of the CPU of said computer, and
a second BUS interconnecting said information devices of said automotive information system.

3. An automotive information system, comprising:
a controlling computer having a CPU;
a plurality of information devices;
a local BUS corresponding to the form of the CPU of said computer; and
a PCI BUS interconnecting said information devices of said automotive information system.

4. An automotive information system, according to Claim 2 or 3, further comprising data torn converting means for converting the form of data exchanged between raid BUSes.

5. An automotive information system according to one of Claims 1 to 4, further comprising a third BUS that connects said plurality of information devices in a daisy-chain fashion.

6. An automotive computer system, comprising:
an operating system that implements environment necessary for execution of a program of a predetermined form;
a CPU;
an automotive information system having a plurality of information devices; and
controlling means for controlling said automotive information system.

7. An automotive computer system, comprising:
a computer having a CPU;
an automotive information system having a plurality of information devices;
a first BUS corresponding to the form of said CPU of said computer; and
a second BUS interconnecting said information devices of said automotive information system.

8. An automotive computer system, comprising:
a computer having a CPU;
an automotive information system having a plurality of information devices;
a local BUS corresponding to the form of said CPU of said computer; and
a PCI BUS interconnecting said information devices of said automotive information system.

9. An automotive computer system according to Claim 7 or 8, further comprising data form converting means for converting the form of data to be exchanged between said BUSes.

10. An automotive computer system according to one of Claims 6 to 9, further comprising a third BUS for connecting said plurality of information devices of said automotive information system in a daisy-chain fashion.

11. A method of controlling an automotive information system by using a computer having an operating system, comprising:
causing said operating system to implement environment necessary for executing a program of a predetermined form; and
causing said program to control said automotive information system.

12. A method of controlling an automotive information system including a plurality of information devices by using a computer having a CPU, comprising:
causing said CPU to transmit and receive data through a first BUS corresponding to the form of said CPU; and
causing sold information devices to exchange data through a second BUS interconnecting said information devices.

13. An automotive information system, comprising:
a plurality of devises for providing at least one of audio data and digital data;
transmitting means for transmitting, in the form of digital signals, the audio data and digital data from said devices;
processing means for processing the digital data and the audio data in the form of the digital signals;
audio output means for outputting, in the form of analog signals, the audio data processed by said processing means; and
digital output means for outputting the digital data processed by said processing means.

14. An automotive information system according to Claim 13, comprising A/D conversion means for converting analog signals supplied from said devices into audio data in the form of digital signals.

15. An automotive information system according to Claim 13 or 14, wherein said plurality of devices include a radio tuner.

16. An automotive information system according to one of Claims 13 to 15, wherein said plurality of devices include a microphone.

17. An automotive information system according to one of claims 13 to 16, wherein said transmitting means includes a PCI BUS.

18. An automotive information system according to one of Claims 13 to 17, wherein said transmitting means includes data destination determining means which determines destination to which the data is to be transmitted, based on the device by which said data is provided.

19. An automotive information system according to one of Claims 13 to 18, further comprising a digital sound processor.

20. An automotive information system according to one of Claims 13 to 19, wherein said audio output means includes:
D/A conversion means for effecting D/A conversion to convert the processed audio data into analog signals; and
an amplifier for enabling the analog signals to activate a speaker.

21. An automotive information system according to one of Claims 13 to 20, wherein said digital output means includes an operation display seation for outputting the processed digital data.

22. An automotive information system according to one of Claims 13 to 21, further comprising connecting means for connecting said plurality of devices of said automotive information system in a daisy-chain fashion.

23. An automotive information system according to Claim 22, wherein said connecting means includes a USB and said transmission means includes a PCI BUS, said automotive information system further comprising: form conversion means for converting the audio data and the digital data transmitted through said USB into data of a form corresponding to the PCI BUS.

24. An automotive information system according to one of Claims 13 to 23, wherein said plurality of devices include at least one of a CD-ROM auto-changer for reading data from music CDs and CD-ROMs while changing the CD or the CD-ROM from one to another, an alarm system for security purpose, and an automotive telephone system.

25. A method of controlling an automotive information system having a plurality of devices, comprising the steps of:
causing said plurality of devices to supply at least one of audio data and digital data;
transmitting, in the form of digital signals, the audio data and digital data supplied by said devices;
processing the digital data and the audio data in the form of digital signals;
outputting the processed audio data in the form of analog signals; and
outputting the processed digital data.
